# EUROPEAN PATENT APPLICATION

(11) **EP 2 460 413 A1**
(43) Date of publication of application: **06.06.2012**
(21) Application number: 10193366.1
(22) Date of filing: 01.12.2010
(51) Int. Cl.: A23C 9/133

(54) **Set-style fruit yoghurts**

(71) Applicant: Nestec S.A., 1800 Vevey (CH)
(72) Inventor: Inquimbert, Nelly, 76210, Bernières (FR); Serre, Jean-Emmanuel, 14100 Le Mesnil-Eudes, (FR); Delattre, Jean-Marie, 14100 Beuvillers, (FR); Toquet, Sébastien, 76119, Sainte Margueurite sur mer (FR)
(74) Representative: Rossand, Isabelle

(57) **Abstract**

The present invention relates to a set-style yoghurt product comprising a whole fruit preparation that is evenly distributed through-out the product and does not contain visible pieces of fruit, and to a method of manufacturing said product by first micronising the whole fruit preparation, then mixing said fruit preparation with a milk base and a dairy starter culture, and thereafter fermenting the mixture without further stirring or agitation.

## Description

The present invention relates to a set-style yoghurt product comprising a whole fruit preparation that is evenly distributed through-out the product and does not contain visible pieces of fruit, and to a method of manufacturing said whole fruit comprising set-style yoghurt product.

In recent years, cultured milk products referred to as yoghurt or yoghurt-like products have enjoyed increasing popularity. Particularly, more and more consumers are attracted by yoghurt products comprising a true fruit content. Thereby sweetened stirred-styled yoghurt products with fruits have found a large acceptance with consumers as well as yoghurt beverage products, such as drinking yoghurts or "smoothy" type of products.

Yoghurt is classically known as a fermented milk product that originated many centuries ago from traditional Eastern European products. Its popularity has grown over the last century and a variety of different yoghurt products are today consumed in most parts of the world. Although its texture and flavors may vary from one region of the world to another, the basic ingredients and manufacturing process are essentially similar.

The major ingredient in yoghurt production is milk which can derive from a variety of different animals. Today, particularly, industrialized yoghurt products make use of cow's milk, whereas traditionally yoghurt products were also produced from sheep, buffalo, goat and camel milk. Furthermore, milk derived from plant origin such as for example from soya is also very popular with the today's consumer. Whole milk, skimmed milk or milk enriched with cream may be used, to lower or raise the fat content of the products as desired.

A further important ingredient in the industrial manufacturing of yoghurt products are starter cultures which are usually a mix of 2 or more different lactic acid producing food-grade bacteria. Traditional yoghurt thus is the result of a milk fermentation process by a Streptococcus thermophilus and a Lactobacillus delbrueckii bulgaricus strain. More recent type of yoghurt products, however, may comprise also other milk fermenting micro-organisms, either in substitution or in addition, such as Lactobacillus acidophilus, Lactobacillus helveticus, and a variety of different Bifidobacteria.

Yoghurt products are usually manufactured by first standardizing the milk base with other dairy ingredients to achieve the desired fat and milk solids content, pasteurizing the mixture and then fermenting the milk base with the selected starter cultures. Thereafter, the fermented, coagulated milk product is cooled down. At this stage, fruit and flavors may be incorporated into the fermented milk and the mixture stirred to well mix the added ingredients with the coagulated milk matrix. Thereafter, the product can be packed and stored at refrigeration temperatures.

Thus, for example, EP0184267 discloses a process for preparing stirred yoghurt. The process can be used to prepare fruit yoghurt or yoghurt containing fruit syrup.

It is a clear trend today that consumers wish to have their yoghurt products made with fresh whole fruits and having the use of fruit syrups and artificial aroma substances limited.

US4410549 discloses a preparation method of a low fat fruit-containing yoghurt product. Thereby, the preparation method makes use of fruit pieces or whole berries in the production process. Those fruits are either mixed to a fermented milk resulting in a stirred (Swiss style) yoghurt product, or having the fruits in conventional yoghurt containers overlaid by the fermented milk (Western style).

Similarly, US4837036 discloses the production of a fruit containing yoghurt by first fermenting the milk base with selected starter cultures to an acidic coagulant which thereafter is broken up to a smooth continuous mass by pumping the fermented coagulant through a small orifice, before blending it with the fruit preparation.

US6740344 discloses a process to produce a yoghurt base and a fruit base separately. Thereafter, the fruit is added first directly to the container, typically to the bottom, prior to filling said container with the yoghurt base. This process results in a typical bilayer product, with the fruit preparation at the bottom and the white yoghurt base on the top.

In particular, US2007/0224327 further discloses an improvement of the production of bilayered yoghurt products, containing fresh whole fruits. Here again, the fruit preparation is not mixed with the yoghurt mass and resides on the bottom of the product container.

In certain markets and cultures consumers prefer yoghurt products which are not stirred but which are set-style, i.e. fermented directly in the pot or cup of consumption. These products have a different textural and visual aspect as the conventional stirred Swiss-type yoghurts. They are not creamy and semi-fluid as like custard, but they have a solid texture which is only broken up by a spoon upon consumption, known in the dairy industry under the term `clean cut'. Most of those set-style products are "white" products, i.e. composed basically only of a milk base. However, products are on the market place which contain with the milk base added aromas, colorings, flavors or fruit syrups.

As what is true for the market of stirred yoghurt products, consumers preferring set-style yoghurt products may also wish to have their yoghurts made with fresh whole fruits and not with fruit syrups and/or artificial aromas.

The inventors are not aware, however, that any set-style yoghurt products are known on the market place which contain whole fruits or whole fruit extracts, where the fruits or fruit extract are distributed evenly with the fermented milk base, and not provided in a container separately as for example in a bilayered product as described above.

In fact, the inventors have found that the use of any standard known processing conditions and standard fruit based raw materials does not allow a production of a set-style yoghurt product wherein the fruit extract is evenly or homogenously distributed within the white fermented dairy base. Either most of the fruit extract falls to the bottom of a container during the incubation time for the fermentation, where there is no stirring anymore and where the milk base is not solidly coagulated yet, or it floats to the top of said container. Neither of both provides a fermented set-style yoghurt product with a nice, appealing appearance of a uniform mixture of the milk and fruits.

Hence, the object of the present invention was to provide a set-style yoghurt product which comprises a whole fruit preparation which is evenly distributed through-out the product in the milk-base, and where the final product does not contain visible pieces of said whole fruit preparation, and a process for producing said set-style yoghurt product.

The object of the present invention is achieved by the subject matter of the independent claims. The dependent claims further develop the idea of the present invention.

Accordingly, the present invention provides in a first aspect a set-style yoghurt product comprising a whole fruit preparation and a milk base characterized in that i) the whole fruit preparation is evenly distributed through-out the product, and ii) the product does not contain visible pieces of fruit.

In a second aspect, the invention provides a method for producing a set-style yoghurt product, comprising the steps of: i) micronising a whole fruit preparation; ii) mixing said whole fruit preparation to a milk base and inoculating the mix with a dairy starter culture; and iii) fermenting the resulting mix without further stirring or agitation into a set-style yoghurt product.

Thereby, "yoghurt product" is defined herein as a fermented milk product of a yoghurt type, which milk is from either animal or plant origin, and which is the result of a fermentation by a starter culture composed of Streptococci, Lactobacilli and/or Bifidobacteria.

A "set-style yoghurt product" is produced by dispensing a milk base immediately after inoculation with a starter culture into containers or packages for being fermented in said containers without further stirring or agitation to result in a yoghurt product. Such set-style yoghurt products have a firm, solid texture of the coagulated milk matrix, which is only broken up for example with a spoon upon consumption by a consumer. The characteristic of this solid texture is also known in the dairy industry under the term 'clean cut'.

A "whole fruit preparation" is defined as a preparation comprising the entire edible matters of whole fruits as for example entire fruits or a puree made of entire fruits.

A "milk base" is defined as milk which has been standardized for industrial purposes in respect to fat, milk solids, sugar and other ingredients content. The milk can derive from a variety of different animals such as from cow, sheep, buffalo, goat or camel, or can be of plant origin such as for example from soya. A milk base can comprise whole milk, partially skimmed milk, fully skimmed milk, powdered milk or any milk enriched with cream, for example to lower or raise the fat content of a final product as desired.

"Evenly distributed" means that the visual aspect of the final yoghurt product is of a homogenous mix between the fruit and the milk part through-out the entire volume of said product.

"Visible pieces of fruit" means that such pieces are visible by the naked eye as individual fruit pieces if mixed in a yoghurt milk matrix. Such fruit pieces preferably have a maximal diameter of 500 micro-meters or below.

"Micronising" a fruit preparation means disrupting fruit pieces present in the fruit preparation into further smaller pieces of fruit which are all finally of a size that is below the millimeter range in diameter. Micronising a fruit preparation can be achieved for example by exerting a high shear condition to said fruit preparation.

The inventors surprisingly found that when micronising whole fruits or whole fruit extracts such as a fruit puree, for example under high shear conditions to a certain maximal size of the fruit particles in the whole fruit preparation, said fruit preparation when admixed to a milk base before fermentation maintains its homogeneous evenly distributed aspect in the milk product all along the fermentation and milk coagulation process without the need to be stirred or agitated.

Advantageously, this technology can be used to manufacture set-style yoghurt products containing whole fruit extracts which now have a visual homogeneous appealing aspect to consumers. Hence, consumers preferring set-style yoghurt products have now the possibility to consume all the good, healthy and tasty constituents of a whole fruit in an attractive form of a set-style yoghurt product.

In one of the embodiments, the whole fruit preparation comprises whole fruits and/or puree from whole fruits. Such whole fruits are preferably selected from the group consisting of strawberry, raspberry, blackberry, bilberry, blueberry, cranberry, peach, apricot, apple, pear, plum, orange, grape, kiwifruit, banana, mango, pineapple and pomegranate, or a combination thereof.

Advantageously, the whole fruit preparation is prepared directly from fresh whole fruits. Alternatively, a puree or mash from whole fruits can be used as this form of whole fruit may be more adapted for a use in an industrial process. Such puree or mash can be produced from either cooked or non-cooked whole fruits by for example using a blender.

In a preferred embodiment, the whole fruit preparation comprises at least 60 wt%, preferably at least 90 wt% whole fruits and/or puree from whole fruits. This fruit preparation has the advantage that its major part of the preparation is from whole fruits. Hence, its composition comprises only to a limited amount other ingredients such as sugar, stabilizers, colorants or preservatives. Such whole fruit preparations are considered by consumers as being more natural and healthier. The whole fruit preparation may also consist of whole fruits and/or puree from whole fruit.

In a further embodiment, the amount of the whole fruit preparation in the product may be in the range from 2 - 20 wt%. Preferably, however, the amount of the whole fruit preparation may be in the range from 3 - 10 wt%, and even more preferably from 5 - 8 wt%. This allows to produce a milk product which has a sufficient content of fruit in the final product to provide the consumer with the delight of natural taste and aroma of fresh fruits and at the same time also a substantial amount of the healthy constituents of a whole fruit in a single serving. For example, the set style yoghurt of the invention may comprise substantial amounts of natural vitamins and minerals, such as vitamin C, natural dietary fibers and other natural phytochemicals with essential biological functions.

In a further embodiment, the whole fruit preparation consists of particles of 500 micro-meters in diameter or smaller, preferably of 200 micro-meters in diameter or smaller, more preferably of 100 micro-meters in diameter or smaller.

The inventors observed that the smaller the whole fruit particles are in a set-style yoghurt production, the longer the mix of those fruit particles with the milk remains homogenously distributed before the coagulation of the milk protein upon fermentation sets in. Hence, the smaller the particles, the more homogenous and evenly distributed is the fruit preparation in the set-style yoghurt thereafter, even if for some reasons the proper fermentation process was delayed in an industrial production setting.

In still a further embodiment, the physical densities of the whole fruit preparation and the milk base differ at most by 10%, more preferably by 2%, and ideally are about the same. In the latter case, the physical conditions to maintain a homogenous mix between the fruit preparation and the milk base were found to be optimal. A potential sedimentation of certain fruit particles upon storage in the milk base before coagulation of the latter is minimal. In fact, those conditions allow to even pre-mix the milk base with the fruit preparation before inoculating the milk with the starter cultures e.g. for a better standardization, pasteurization or homogenization of the entire mix.

In a still further embodiment, the set-style yoghurt product further comprises a stabilizer such as for example gelatin, alginate, carageenan, locust bean, guar gum, pectin or starch. This allows further stabilizing the texture of the yoghurt product.

In a still further embodiment, the total fat content of the final yoghurt product is less than 0.5 wt%, preferably of 0.1 wt% or less. This allows providing a low-calorie product solution to all those consumers, who need or want to reduce their total intake on fats.

In the second aspect, the invention provides a method for producing a set-style yoghurt product. One of the embodiments is micronising the whole fruit preparation under high shear condition as can be achieved by a high shear mixer. This can be achieved by either a suitable batch or inline mixer, or a high shear granulator. This provides an industrially feasible and cost effective method of micronising whole fruits, since equipments suitable for such high shearing of fruit preparations for industrial scales are available.

In a further embodiment, the method further comprises the step of pasteurizing the whole fruit preparation. This helps to reduce the presence of food spoilage and further undesired micro-organisms potentially present in the whole fruit preparation, and hence contributes to the overall food safety of the final yoghurt product.

In a still further embodiment, the method further comprises a homogenization of the milk base before and/or after mixing said milk base with the whole fruit preparation. Thereby, the homogenization can be according to standard milk homogenization processes as well known in the dairy industry. Particularly, the milk base, before or after mixing with the whole fruit preparation, can be heated to 70°C and then passed through a homogenizer at 200 bars. The advantage of such a homogenization process before inoculating the mix with a dairy starter culture is to generate a more consistent milk base before the fermentation process.

In a still further embodiment, the method further comprises the step of dispensing the mix of a whole fruit preparation with a milk base and after inoculation with a dairy starter culture, into multiple containers before fermenting said mix without further stirring or agitation into a set-style yoghurt product. In this way, single portions can be filled and fermented directly in individual containers or cups, intended to be distributed to consumers. Thereby, the full textural and visual aspect of a set-type fermented product is maintained and can be directly appreciated by the consumer.

Those skilled in the art will understand that they can freely combine all features of the present invention disclosed herein. In particular, features described for the product of the present invention may be combined with the method of the present invention and vice versa. Further, features described for different embodiments of the present invention may be combined.

Further advantages and features of the present invention are apparent from the example.

### Examples

### Example 1:

### Whole fruit preparation:

10 kg of fresh strawberries were washed and thereafter blended in a mixer for 20 min to result in a fruit puree. The strawberry puree was cooled down to 4°C and further processed with a Co-Screw Colloidal (SWT-3+PK-58/25) from Fryma (Switzerland) under high shear conditions to a fine fluid fruit preparation. The size of particles in this resulting fruit preparation was measured with a laser Granulometer Mastersizer from Malvern (United Kingdom) and determined as being maximum 450 micro-meters in diameter and below. The resulting whole fruit preparation was pasteurized under standard conditions and thereafter stored frozen at -20°C.

### Preparation of the milk base:

100 kg of a milk base was composed by mixing 95 kg of skimmed milk with milk powder and water to result into a mix comprising 2.5 wt% milk proteins and 0.1 wt% milk fat. Further, 0.25 wt% gelatin was added to this milk base. Thereafter, the milk base was pre-heated to 70°C and homogenized at 200 bars. Thereafter, the milk base was pasteurized at 92°C for 6 min and cooled thereafter to 42°C.

### Preparation of the set-style yoghurt product:

The frozen whole fruit preparation was thawn and 8 kg thereof were added to the still 42°C warm 100 kg prepared milk base. At the same time, 0.02 wt% of a frozen starter culture containing Streptococcus thermophilus and Lactobacillus delbrueckii bulgaricus strains was added to the mixture. The whole mix was well stirred in a 150 L steel mixing tank and used immediately thereafter through an automatic dispensing system to fill multiple transparent plastic cups with each 125 g of the mixture. The individual cups were then closed on-line on a packaging machine with plastified membranes and thereafter transferred to a warm room where the cups were incubated without any shaking or moving for 5 h at 42°C. Then, the cups were transferred to a cold room where they were cooled and stored at 5°C.

### Characteristics of the final product:

The resulting product was a typical set-style yoghurt product. The texture of the product was a firm, solid continuous block of coagulated milk proteins encompassing the entire volume of each cup. The strawberry preparation was well and evenly distributed through-out the entire volume of each cup as could be seen through the transparent walls of the cups. There was no visible sedimentation or floating of any fruit material on either the bottom or the top of the cups.

## Claims

1. A set-style yoghurt product comprising a whole fruit preparation and a milk base **characterized in that** i) the whole fruit preparation is evenly distributed through-out the product, and ii) the product does not contain visible pieces of fruit.

2. The product of claim 1, wherein the whole fruit preparation comprises whole fruits and/or puree from whole fruits.

3. The product of claim 1 or 2, wherein the whole fruit preparation comprises at least 60 wt%, preferably at least 90 wt% whole fruits and/or puree from whole fruits.

4. The product of one of the preceding claims, wherein the amount of the whole fruit preparation in the product is in the range from 2 - 20 wt%.

5. The product of one of the preceding claims, wherein the amount of the whole fruit preparation in the product is in the range from 3 - 10 wt%, preferably from 5 - 8 wt%.

6. The product of one of the preceding claims, wherein the whole fruit preparation consists of particles of 500 micro-meters in diameter or smaller.

7. The product of one of the preceding claims, wherein the whole fruit preparation consists of particles of 200 micro-meters, preferably of 100 micro-meters in diameter or smaller.

8. The product of one of the preceding claims, wherein the physical densities of the whole fruit preparation and the milk base are the same.

9. The product of one of the preceding claims further comprising a stabilizer such as gelatin, alginate, carageenan, locust bean, guar gum, pectin or starch.

10. The product of one of the preceding claims, wherein the total fat content of the product is less than 0.5 wt%, preferably of 0.1 wt% or less.

11. A method for producing a set-style yoghurt product of claim 1, comprising the steps of: i) micronising a whole fruit preparation; ii) mixing said whole fruit preparation to a milk base and inoculating the mix with a dairy starter culture; and iii) fermenting the resulting mix without further stirring or agitation into a set-style yoghurt product.

12. The method of claim 11, wherein micronising the whole fruit preparation is under high shear condition.

13. The method of claim 11 or 12, further comprising the step of pasteurizing the whole fruit preparation.

14. The method of one of the claims 11-13, wherein step ii) further comprises a homogenization of the milk base before and/or after mixing said milk base with the whole fruit preparation.

15. The method of one of the claims 11-14, further comprising the step of dispensing the mix of step ii) into multiple containers before fermenting said mix without further stirring or agitation into a set-style yoghurt product.
